# EUROPÄISCHE PATENTSCHRIFT

(11) **EP 1 423 033 B1**
(45) Veröffentlichungstag und Bekanntmachung des Hinweises auf die Patenterteilung: **24.10.2007**
(21) Anmeldenummer: 02758482.0
(22) Anmeldetag: 23.08.2002
(51) Int. Cl.: A47J 19/02

(54) **MOTORISCHES KÜCHENGERÄT**
POWERED KITCHEN DEVICE
APPAREIL DE CUISINE A MOTEUR

(30) Priorität: 30.08.2001 DE 10142505
(43) Veröffentlichungstag der Anmeldung: 02.06.2004
(73) Patentinhaber: BSH Bosch und Siemens Hausgeräte GmbH, 81739 München (DE)
(72) Erfinder: AREH, Marko, 2360 Radlje ob Dravi (SI); KRAMER, Siegmund, 83417 Kirchanschöring (DE); PAVLOVIC, Henrik, Ljubno ob Savin 3333 (SI); STEFFL, Michael, 83250 Marquartstein (DE); ZIBRET, Igor, 3327 Smartno ob Paki (SI)
(86) Internationale Anmeldenummer: PCT/EP2002/009465
(87) Internationale Veröffentlichungsnummer: WO 2003/020094

(56) Entgegenhaltungen:
- DE-A- 1 928 183

## Beschreibung

Die Erfindung betrifft ein motorisches Küchengerät, insbesondere Fruchtpresse, mit einer Antriebseinheit und einem Gehäuse nach dem Oberbegriff von Anspruch 1.

Ein gattungsbildendes Küchengerät ist insb. aus der DE 1 928 183A bekannt.

Aus der EP 0 362 058 B1 ist eine durch einen Elektromotor angetriebene Fruchtpresse bekannt. Ein aus einem Auffangbehältnis herausragendes Element in Form eines Rotationsparaboloids mit Graten dient zum Auspressen einer Zitrusfrucht. Zusammen mit einer Auffangschale zum Auffangen des beim Auspressen herabtropfenden Fruchtsafts wird es von einem Gehäuse aufgenommen, in dem auch eine Antriebseinheit mit einem Antriebsmotor, Riemenscheiben, einem Zahnriemen und einer mit dem Element verbundenen Abtriebswelle integriert ist der Auffangschale ragt eine Antriebswelle hindurch, die das herausragende Element und mit diesem das Auffangbehältnis in Drehbewegung versetzt.

Es ist die Aufgabe der Erfindung, ein einfacher aufgebautes motorisches Küchengerät zu schaffen.

Erfindungsgemäß wird diese Aufgabe bei einem Küchengerät der eingangs genannten Art durch die Merkmale des Kennzeichnenden Teiles von Anspruch 1 gelöst. Gemäß der Erfindung ist es möglich, in das Gehäuse die Antriebseinheit in axialer Richtung einzuführen, wobei während des Einführens die Vorsprünge außerhalb der mit den Öffnungen in axialer Richtung fluchtenden Bereichen der Innenseite der Außenwand des Gehäuses bewegt werden. Sodann werden die Vorsprünge in die Öffnungen hineingedreht. Auf diese Weise wird die Antriebseinheit nach Art eines Bajonettverschlusses in das Gehäuse eines Küchengeräts eingebracht.

Erfindungsgemäß weist das Küchengerät einen wenigstens im wesentlichen zylindrischen Aufbau auf, was nicht ausschließt, dass sich an den zylindrischen Aufbau entweder in Fortsetzung der Längsachse des zylindrischen Aufbaus kubus-, quader-, kegel- oder kegelstumpfförmige Anschlusselemente anschließen. Ebenso können an der Außenseite der Mantelwand des zylindrischen Aufbaus andere Anschlussbauteile fest mit mit dem zylindrischen Aufbau verbunden sein.

Jedoch hat der zylindrische Aufbau selbst aufgrund seiner einfachen und kompakten Form den Vorteil, dass er sowohl eine Antriebseinheit mit einem Elektromotor und einem Getriebe als auch den zum Auspressen einer Frucht dienenden Teil mit dem Element, dem Auffangbehältnis und mit der Auffangschale aufnimmt.

Erfindungsgemäß hat das Küchengerät eine Antriebseinheit, bei der die Vorsprünge von elastischen Elementen gebildet sind, die gegenüber der Höhe der Öffnungen ein geringes Übermaß haben und die in die Öffnungen hineindrückbar sind. Durch den Einsatz eines elastischen Materials wird eine Schwingungen und Geräusche reduzierende Lagerung erreicht.

Aufgrund der Erfindung wird ein zylindrischer Innenraum platzsparend ausgenutzt, weil die Antriebseinheit unter maximaler Ausnutzung des zur Verfügung stehenden Platzes in ihm angeordnet ist. Die Antriebseinheit wird auf einfache Weise und schnell in dem Innenraum montiert oder demontiert. Ein aufwendiges Verschrauben der Antriebseinheit mit dem Außengehäuse ist nicht notwendig.

Vorteilhafte Weiterbildungen ergeben sich aus den Unteransprüchen und aus der Beschreibung.

Besonders geeignet ist ein Küchengerät, bei dem die Öffnungen im Bereich der Einbuchtungen so ausgebildet sind, dass sie wenigstens einen Teil einer zylindrischen Wand der Einbuchtungen und einen Teil einer in radialer Richtung verlaufenden Wand einnehmen.

In einer vorteilhaften Variante des Küchengeräts sind die elastischen Elemente auf vorspringenden Nasen eines Gehäuses der Antriebseinheit aufsteckbar.

Mit Vorteil lässt sich ein Küchengerät einsetzen, bei dem die Außenwand auf ihrer Innenseite eine in axialer Richtung verlaufende Leiste hat, entlang der die Antriebseinheit in das Gehäuse des Küchengeräts einführbar ist und bei dem die Antriebseinheit einen Durchmesser hat, der kleiner ist als der Innendurchmessers des Gehäuses des Küchengeräts abzüglich der Höhe der Leiste.

Um das Einbringen der Vorsprünge in die Öffnungen zu erleichtern, weisen diese vorzugsweise Einführschrägen im Bereich der zylindrischen Wand der Einbuchtungen auf.

Um die Befestigung der Vorsprünge der Antriebseinheit innerhalb des Gehäuses des Küchengeräts nach außen unzugänglich zu machen, ist die erste Außenwand von einer zweiten Außenwand umschlossen ist, die dicht an die erste Außenwand angrenzt.

Nachstehend wird die Erfindung in einem Ausführungsbeispiel anhand der Figuren näher erläutert. Es zeigen:
- Fig. 1:: eine perspektivische Anschnitt eines Abschnitts einer zylindrischen Außenwand des Gehäuses,
- Fig. 2:: eine Schnittansicht des Gehäuses und
- Fig. 3: eine perspektivische Schnittansicht des Gehäuses mit einer Antriebseinheit.

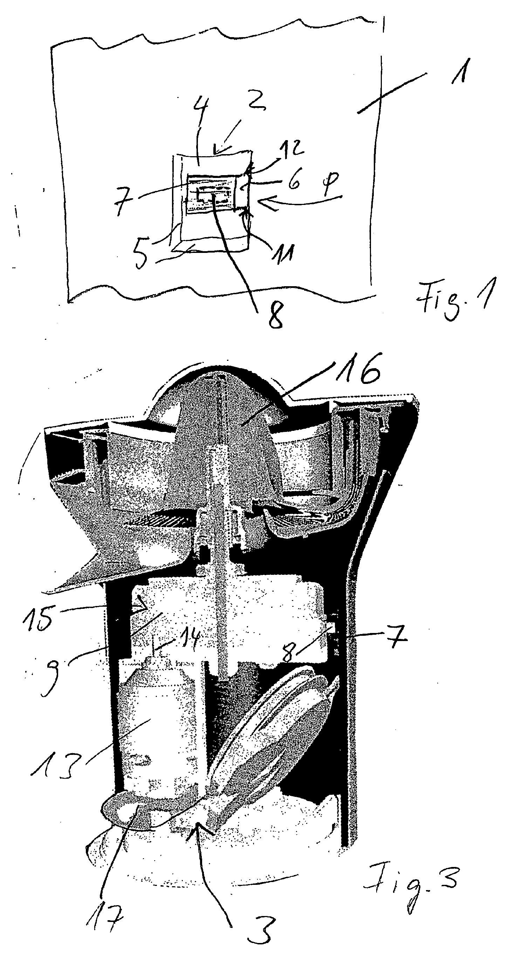

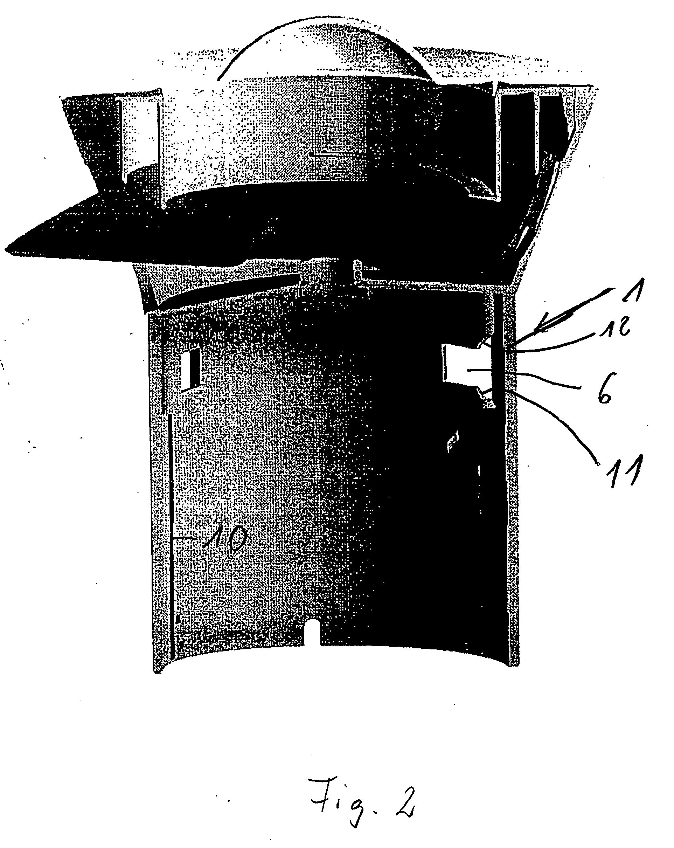

Eine Fruchtpresse (Fig. 1, 2) ist mit einer zylindrischen Außenwand 1 ausgestattet. Diese weist mindestens zwei, vorzugsweise jedoch drei oder mehr, Einbuchtungen 2 auf, die dazu dienen, eine Antriebseinheit 3 (Fig. 3) innerhalb der Außenwand 1 zu befestigen.

Die Einbuchtung 2 umfasst eine gegenüber der Außenwand 1 zurückgesetzte zylindrische Wand 4, die zur Verbindung mit der Außenwand 1 seitlich, oben und unten von einer sich in radialer Richtung erstreckenden Wand 5 umgeben ist. Diese ist ebenso wie die Wand 4 in einem Ausschnitt durch eine Öffnung 6 durchbrochen, die somit sowohl einen sich in radialer Richtung wie einen sich in Richtung der Wand 4 erstreckenden Teil hat. In die Öffnung 6 ist ein Vorsprung 7 der Antriebseinheit 3 hineingeschoben. Der Vorsprung 7 ist von einem elastischen Element , z. B. aus Gummi oder einem elastischen Kunststoff, gebildet, der seinerseits auf einer Nase 8 sitzt, die Teil einer Mantelwand 9 der Antriebseinheit 3 ist.

Der Vorsprung 7 wird in Drehrichtung (Pfeil P) in die Öffnung 6 hineingeschoben und ragt durch diese hindurch, wobei das elastische Material gegenüber dem Maß der Öffnung in axialer Richtung der Außenwand 1 ein geringfügiges Übermaß aufweist, so dass, wenn die zwei oder drei Vorsprünge 7 in die ihnen zugeordneten Öffnungen 6 hineingeschoben sind, ein fester Sitz der Antriebseinheit 3 in dem Gehäuse, d. h. der Außenwand 1, gewährleistet ist.

Um zu erreichen, dass die Winkelposition der Antriebseinheit 3 gegenüber der Außenwand 1 festgelegt ist, ist auf der Innenseite der Außenwand 1 eine sich in Längsrichtung, d. h. in axialer Richtung, erstreckende Leiste 10 vorgesehen. Diese korrespondiert beispielsweise mit einem entsprechenden Rücksprung in der Mantelwand 9, der aber noch ausreichend breit in Umfangsrichtung ist, um eine Drehbewegung in Richtung des Pfeils P zu ermöglichen.

Um das Einführen der Vorsprünge 7 in die Öffnungen 6 zu erleichtern, haben diese vorzugweise Einführschrägen 11, 12.

Um die Vorsprünge 7 von außen unzugänglich zu machen, wird eine die Außenwand 1 umhüllende, zweite (hier nicht dargestellte) Außenwand über die Außenwand 1 gestülpt.

Durch die Erfindung wird eine elastische Befestigung einer Antriebseinheit 3 innerhalb eines von einer Außenwand 1 umgebenen Gehäuses eines Küchengeräts geschaffen. Die Antriebseinheit 3 ist elastisch über Vorsprünge 7 in dem Gehäuse gelagert. Sie wird nach Art eines Bajonettverschlusses in dieses eingebracht. Die Antriebseinheit 3 umfasst einen Elektromotor 13, ein von diesem über eine Antriebswelle 14 angetriebenes Untersetzungsgetriebe 15, das seinerseits ein drehendes Element 16 zum Auspressen einer Zitrusfrucht antreibt, und eine Leiterplatte 17 mit einem elektrischen Schaltkreis zur Steuerung des Elektromotors 13.

## Patentansprüche

1. Motorisches Küchengerät, insbesondere Fruchtpresse, mit einer Antriebseinheit (3) und einem Gehäuse, wobei das Gehäuse eine erste zylindrische Außenwand (1) mit mindestens zwei Einbuchtungen (2) aufweist, die Einbuchtungen (2) Öffnungen (6) haben und durch die Öffnungen (6) Vorsprünge (7) der Antriebseinheit (3) hindurchragen, die der Form der Öffnung (6) angepasst sind,
**dadurch gekennzeichnet, dass** die Vorsprünge (7) von elastischen Elementen gebildet sind, die gegenüber der Höhe der Öffnungen (6) ein geringes Übermaß haben und die in die Öffnungen (6) hineindrückbar sind.

2. Küchengerät nach Anspruch 1, **dadurch gekennzeichnet, dass** die Öffnungen (6) wenigstens einen Teil einer zylindrischen Wand (4) der Einbuchtungen (2) und einen Teil einer in radialer Richtung verlaufenden Wand (5) einnehmen.

3. Küchengerät nach einem der Ansprüche 1 oder 2, **dadurch gekennzeichnet, dass** die elastischen Elemente auf vorspringenden Nasen (8) eines Gehäuses der Antriebseinheit (3) aufsteckbar sind.

4. Küchengerät nach einem der Ansprüche 1 bis 3, **dadurch gekennzeichnet, dass** die erste Außenwand (1) auf ihrer Innenseite eine in axialer Richtung verlaufende Leiste (10) hat, entlang der die Antriebseinheit (3) in das Gehäuse des Küchengeräts einführbar ist und dass die Antriebseinheit (3) einen Durchmesser hat, der kleiner ist als der Innendurchmessers des Gehäuses des Küchengeräts abzüglich der Höhe der Leiste (10).

5. Küchengerät nach einem der Ansprüche 1 bis 4, **dadurch gekennzeichnet, dass** die Öffnungen (6) Einführschrägen (11, 12) im Bereich der zylindrischen Wand (4) der Einbuchtungen (2) umfassen.

6. Küchengerät nach einem der Ansprüche 1 bis 5, **dadurch gekennzeichnet, dass** die erste Außenwand (1) von einer zweiten Außenwand umschlossen ist, die dicht an die erste Außenwand (1) angrenzt.

## Claims

1. Motorised kitchen appliance, particularly fruit press, with a drive unit (3) and a housing, wherein the housing has a first cylindrical outer wall (1) with at least two depressions (2), the depressions (2) have openings (6) and projections (7), which are adapted to the shape of the opening (6), of the drive unit (3) protrude through the openings (6), **characterised in that** the projections (7) are formed by resilient elements which have a small oversize relative to the height of the openings (6) and which can be pressed into the openings (6).

2. Kitchen appliance according to claim 1, **characterised in that** the openings (6) take in at least a part of a cylindrical wall (4) of the depressions (2) and a part of a wall (5) extending in radial direction.

3. Kitchen appliance according to one of claims 1 and 2, **characterised in that** the resilient elements can be plugged onto protruding lugs (8) of a housing of the drive unit (3).

4. Kitchen appliance according to one of claims 1 to 3, **characterised in that** the first outer wall (1) has on its inner side a strip (10), which extends in axial direction and along which the drive unit (3) is introducible into the housing of the kitchen appliance, and that the drive unit (3) has a diameter which is smaller than the inner diameter of the housing of the kitchen appliance less the height of the strip (10).

5. Kitchen appliance according to one of claims 1 to 4, **characterised in that** the openings (6) have introduction chamfers (11, 12) in the region of the cylindrical wall (4) of the depressions (2).

6. Kitchen appliance according to one of claims 1 to 5, **characterised in that** the first outer wall (1) is enclosed by a second outer wall which tightly adjoins the first outer wall (1).

## Revendications

1. Appareil de cuisine à moteur, en particulier presse-fruits, comprenant une unité d'entraînement (3) et un boîtier, le boîtier comprenant une première paroi extérieure (1) cylindrique pourvue d'au moins deux creux (2), les creux (2) ayant des ouvertures (6), et des parties saillantes (7) de l'unité d'entraînement (3), adaptées à la forme de l'ouverture (6), passant à travers les ouvertures (6), **caractérisé en ce que** les parties saillantes (7) sont formées d'éléments élastiques qui présentent un faible surdimensionnement par rapport à la hauteur des ouvertures (6) et qui sont aptes à être enfoncés dans les ouvertures (6).

2. Appareil de cuisine selon la revendication 1, **caractérisé en ce que** les ouvertures (6) occupent au moins une partie d'une paroi cylindrique (4) des creux (2) et une partie d'une paroi (5) s'étendant dans le sens radial.

3. Appareil de cuisine selon l'une des revendications 1 ou 2, **caractérisé en ce que** les éléments élastiques sont aptes à être placés sur des ergots saillants (8) d'un boîtier de l'unité d'entraînement (3).

4. Appareil de cuisine selon l'une des revendications 1 à 3, **caractérisé en ce que** la première paroi extérieure (1) possède sur sa face intérieure une moulure (10) s'étendant dans le sens axial et le long de laquelle l'unité d'entraînement (3) peut être insérée dans le boîtier de l'appareil de cuisine et **en ce que** l'unité d'entraînement (3) a un diamètre inférieur au diamètre intérieur du boîtier de l'appareil de cuisine, moins la hauteur de la moulure (10).

5. Appareil de cuisine selon l'une des revendications 1 à 4, **caractérisé en ce que** les ouvertures (6) comprennent des biseaux d'insertion (11, 12) au niveau de la paroi cylindrique (4) des creux (2).

6. Appareil de cuisine selon l'une des revendications 1 à 5, **caractérisé en ce que** la première paroi extérieure (1) est entourée d'une seconde paroi extérieure directement adjacente à la première paroi extérieure (1).
